# EUROPEAN PATENT APPLICATION

(11) **EP 4 749 218 A1**
(43) Date of publication of application: **27.05.2026**
(21) Application number: 23952156.0
(22) Date of filing: 11.09.2023
(51) Int. Cl.: F26B 3/347, B29B 13/06, F26B 5/04

(54) **PLASTIC DRYING DEVICE**

(71) Applicant: MITSUBISHI ELECTRIC CORPORATION, Chiyoda-ku Tokyo 100-8310 (JP)
(72) Inventor: KOBAYASHI, Takuto, Tokyo 100-8310 (JP); SAKAKI, Hiroto, Tokyo 100-8310 (JP); ANDO, Nobuhiko, Tokyo 100-8310 (JP)
(74) Representative: Pfenning, Meinig & Partner mbB
(86) International application number: PCT/JP2023/032942
(87) International publication number: WO 2025/057259

(57) **Abstract**

A plastic drying device includes: a container (11) to internally contain a plastic fragment (P); a microwave generating unit (12) to emit a microwave to inside of the container (11); and a vacuum pump (13) to evacuate the inside of the container (11), the vacuum pump (13) communicating with the inside of the container (11).

## Description

### TECHNICAL FIELD

The present disclosure relates to a plastic drying device.

### BACKGROUND ART

In recent years, the recycling of used plastics has been actively explored. In order to recycle used plastics, it is necessary to sort out, by material type, mixed plastic fragments that are obtained by collecting and crushing the used plastics, and contain a mixture of multiple types of plastic fragment. As a plastic sorting method, there is a technology in which electrostatically chargeable plastics are electrostatically charged through friction or the like, and are sorted out by type in an electrostatic field using the differences in the charging characteristics of various types of plastic. Such a plastic sorting technology is disclosed in Patent Literature 1, for example.

### CITATION LIST

### PATENT LITERATURE

Patent Literature 1: JP H10-323580 A

### SUMMARY OF INVENTION

### TECHNICAL PROBLEM

Here, in the plastic sorting technique disclosed in Patent Literature 1, in a case where plastic fragments are wet due to water or the like, the plastic fragments become less electrostatically chargeable. Because of this, it is difficult to appropriately sort out plastic fragments in the plastic sorting technique disclosed in Patent Literature 1.

In view of this, as a solution to the problem described above, it is conceivable to dry plastic fragments before electrostatically charging and sorting out the plastic fragments. However, there is a possibility that plastic fragments may melt if the plastic fragments are directly heated during drying the plastic fragments.

The present disclosure has been made in order to solve the problem described above, and an object thereof is to provide a plastic drying device that is capable of selectively heating water adhering to plastic fragments and of not directly heating the plastic fragments.

### SOLUTION TO PROBLEM

A plastic drying device according to the present disclosure includes: a container to internally contain a plastic fragment; a microwave generating unit to emit a microwave to inside of the container; and an evacuating unit to evacuate the inside of the container, the evacuating unit communicating with the inside of the container.

### ADVANTAGEOUS EFFECTS OF INVENTION

According to the present disclosure, it is possible to selectively heat water adhering to plastic fragments and to not directly heat the plastic fragments. As a result, the present disclosure is capable of preventing plastic fragments from melting during the drying of the plastic fragments.

### BRIEF DESCRIPTION OF DRAWINGS

FIG. 1 is a schematic configuration diagram of a plastic drying device according to a first embodiment.
FIG. 2 is a schematic configuration diagram of another plastic drying device according to the first embodiment.
FIG. 3 is a schematic configuration diagram of a plastic drying device according to a second embodiment.
FIG. 4 is a schematic configuration diagram of a plastic drying device according to a third embodiment.
FIG. 5 is a schematic configuration diagram of a plastic drying device according to a fourth embodiment.
FIG. 6 is a schematic configuration diagram of a plastic drying device according to a fifth embodiment.
FIG. 7 is a schematic configuration diagram of a plastic drying device according to a sixth embodiment.

### DESCRIPTION OF EMBODIMENTS

Hereinbelow, modes for carrying out the present disclosure are explained with reference to the attached drawings in order to explain the present disclosure in more detail.

### First Embodiment.

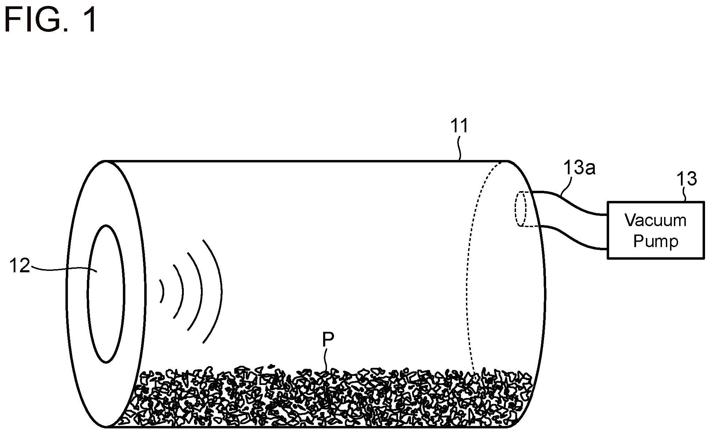

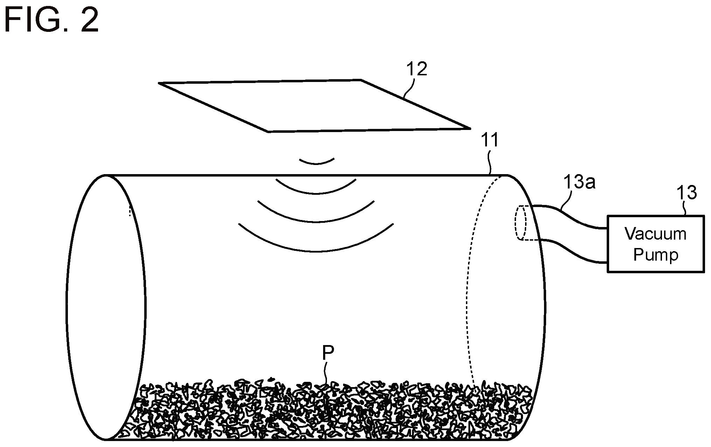

A first embodiment is explained using FIGS. 1 and 2. FIG. 1 is a schematic configuration diagram of a plastic drying device according to the first embodiment. FIG. 2 is a schematic configuration diagram of another plastic drying device according to the first embodiment.

The plastic drying device according to the first embodiment illustrated in FIG. 1 dries wet plastic fragments (including moisture-containing plastic fragments) P. For example, the plastic fragments P are ones obtained by crushing used plastics. In addition, the plastic fragments P are ones formed of the same type of material or ones formed of mutually different types of material.

As illustrated in FIG. 1, the plastic drying device according to the first embodiment includes a container 11, a microwave generating unit 12, and a vacuum pump 13.

The container 11 has a hollow structure. The inside of the container 11 is a closed space. For example, the container 11 is cylindrical. The wet plastic fragments (the group of plastic fragments) P are contained inside the container 11. Note that any of the left and right side surfaces and the outer circumferential surface of the container 11 is provided with a lid (not illustrated) through which the plastic fragments P can be put in and taken out.

The microwave generating unit 12 emits microwaves toward the inside of the container 11. For example, the microwave generating unit 12 is provided on a first side surface of the left and right side surfaces of the container 11. The microwaves emitted from the microwave generating unit 12 are uniformly emitted toward the inside of the container 11.

At this time, the microwaves emitted from the microwave generating unit 12 selectively heat water adhering to the plastic fragments P and do not directly heat the plastic fragments. That is, the plastic fragments P receive heat only through the water heated by the emission of the microwaves. Because of this, the temperature of the plastic fragments P does not become equal to or higher than the temperature of the heated water. Accordingly, the melting of the plastic fragments P is reduced.

Here, it is known that, in microwave heating, the microwave power absorbed varies depending on the material. For example, the microwave power absorbed by water is greater than the microwave power absorbed by plastic. Because of this, in a case where microwaves are emitted toward the inside of the container 11, the microwaves ignore the plastic fragments P, and can selectively heat and evaporate water adhering to the plastic fragments P. As a result, the plastic drying device according to the first embodiment is capable of heating only those that are intended to be heated.

In addition, in the water irradiated with microwaves, molecules collide with each other, thereby generating frictional heat, causing the entire water to generate heat, and raising its temperature. By using microwave heating in this manner, the entire heating target in the microwave electrical field is heated simultaneously. Because of this, in microwave heating, the entire heating target can be heated uniformly. Accordingly, the heating can be performed efficiently without wasting energy.

Note that, whereas the plastic drying device according to the first embodiment illustrated in FIG. 1 has the microwave generating unit 12 directly attached to the container 11, the microwave generating unit 12 may be provided at a position separated from the container 11 as in another plastic drying device according to the first embodiment illustrated in FIG. 2.

The vacuum pump 13 has a vacuum exhaust tube 13a. The leading end of the vacuum exhaust tube 13a is connected to a second side surface in the left and right side surfaces of the container 11, and communicates with the inside of the container 11. Because of this, when the vacuum pump 13 is driven, the vacuum pump 13 evacuates the container 11 via the vacuum exhaust tube 13a. As a result, the internal air pressure of the container 11 decreases to an air pressure equal to or lower than atmospheric pressure. Therefore, the boiling point of water decreases inside the container 11. That is, water adhering to the plastic fragments P becomes more likely to evaporate. Note that the vacuum pump 13 is included in the evacuating unit.

Accordingly, in a case where the plastic fragments P having been wet due to water are to be dried, first, the plastic fragments P having been wet due to water are supplied to the inside of the container 11. Next, the plastic drying device drives the microwave generating unit 12. Because of this, microwaves generated from the microwave generating unit 12 are emitted toward the inside of the container 11. Then, the plastic drying device drives the vacuum pump 13. Because of this, the inside of the container 11 is depressurized by being evacuated.

As a result, the microwaves generated from the microwave generating unit 12 heat and evaporate water adhering to the plastic fragments P supplied to the inside of the container 11. In addition, since the inside of the container 11 has been depressurized by the evacuation, the boiling point of water inside the container 11 has decreased. Because of this, water adhering to the plastic fragments P becomes more likely to evaporate. As a result, the time required for the water to completely evaporate, in other words, the time it takes for the plastic fragments P to dry, is shorter compared to when the inside of the container 11 is not evacuated.

As described above, the plastic drying device according to the first embodiment includes: the container 11 to internally contain the plastic fragments P; the microwave generating unit 12 to emit microwaves to the inside of the container 11; and the vacuum pump 13 to evacuate the inside of the container 11, the vacuum pump 13 communicating with the inside of the container 11. Because of this, the plastic drying device according to the first embodiment is capable of selectively heating water adhering to the plastic fragments P and of not directly heating the plastic fragments P. As a result, the plastic drying device according to the first embodiment is capable of preventing the plastic fragments P from melting during the drying of the plastic fragments P.

### Second Embodiment.

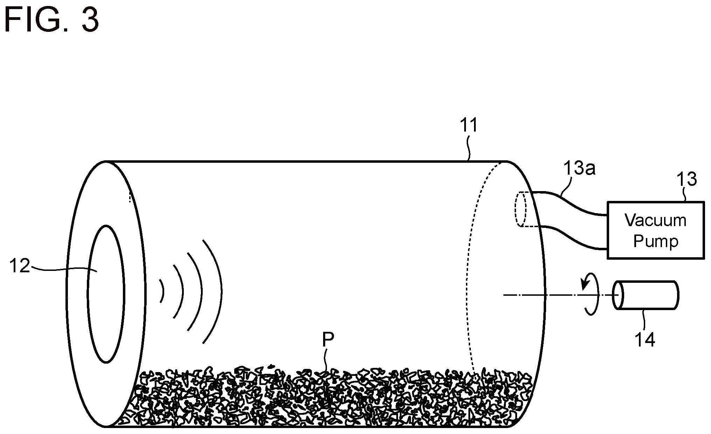

A plastic drying device according to a second embodiment is explained using FIG. 3. FIG. 3 is a schematic configuration diagram of the plastic drying device according to the second embodiment. Note that components having functions similar to those of components explained in the first embodiment described above are given identical reference signs, and explanation thereof is omitted.

As illustrated in FIG. 3, the plastic drying device according to the second embodiment has a structure obtained by adding a rotating unit 14 to the structure of the plastic drying device according to the first embodiment.

The rotating unit 14 rotates a cylindrical container 11 about the central axis. For example, the rotating unit 14 is a motor. In this manner, when the rotating unit 14 rotates the container 11, plastic fragments P contained inside the container 11 are stirred by the rotation of the container 11. Because of this, the portions where the plastic fragments P contact each other and the portions where the plastic fragments P contact water become more likely to be separated. As a result, the plastic drying device according to the second embodiment is capable of reducing uneven drying of the plastic fragments P.

In addition, the plastic fragments P contained inside the container 11 are stirred by the rotation of the container 11, thereby generating friction with each other. Because of this, the plastic drying device according to the second embodiment is capable of electrostatically charging the electrostatically chargeable plastic fragments P by friction for each type of plastic, using differences between the charging characteristics of various types of the plastic fragments P. As a result, the plastic drying device according to the second embodiment is capable of also serving as a charging device.

As described above, the plastic drying device according to the second embodiment includes the rotating unit 14 to rotate the container 11 about the central axis. Because of this, the plastic drying device according to the second embodiment is capable of preventing uneven drying of the plastic fragments P. In addition, the plastic drying device according to the second embodiment is capable of also serving as a charging device.

### Third Embodiment.

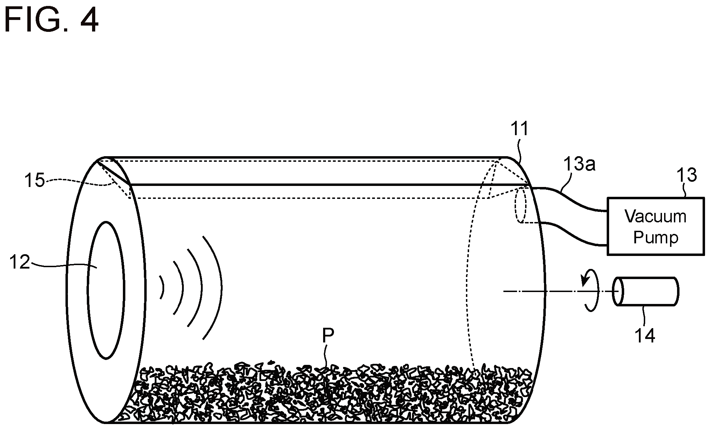

A plastic drying device according to a third embodiment is explained using FIG. 4. FIG. 4 is a schematic configuration diagram of the plastic drying device according to the third embodiment. Note that components having functions similar to those of components explained in the first and second embodiments described above are given identical reference signs, and explanation thereof is omitted.

As illustrated in FIG. 4, the plastic drying device according to the third embodiment has a structure obtained by adding one or more protrusions 15 to the structure of the plastic drying device according to the second embodiment. FIG. 4 illustrates an example in which one protrusion 15 is provided.

The protrusion 15 is provided on the inner circumferential surface of a cylindrical container 11. The protrusion 15 protrudes from the inner circumferential surface of the container 11 toward the radially inner side of the container 11. The protrusion 15 is disposed over the entire area in the axial direction of the inner circumferential surface of the container 11. The protrusion 15 may be a body integrated with or separate from the inner circumferential surface of the container 11.

In this manner, by including the protrusion 15, the plastic drying device according to the third embodiment can mix plastic fragments P contained inside the container 11 well by the rotation of the container 11 by a rotating unit 14. Because of this, the plastic drying device according to the third embodiment is capable of reducing uneven drying of the plastic fragments P. In addition, the plastic drying device according to the third embodiment can shorten the time required for the plastic fragments P to be electrostatically charged.

As described above, the plastic drying device according to the second embodiment includes the protrusion 15 protruding from the inner surface of the container 11 toward the inner side of the container 11. Because of this, the plastic drying device according to the second embodiment is capable of further reducing uneven drying of the plastic fragments P.

### Fourth Embodiment.

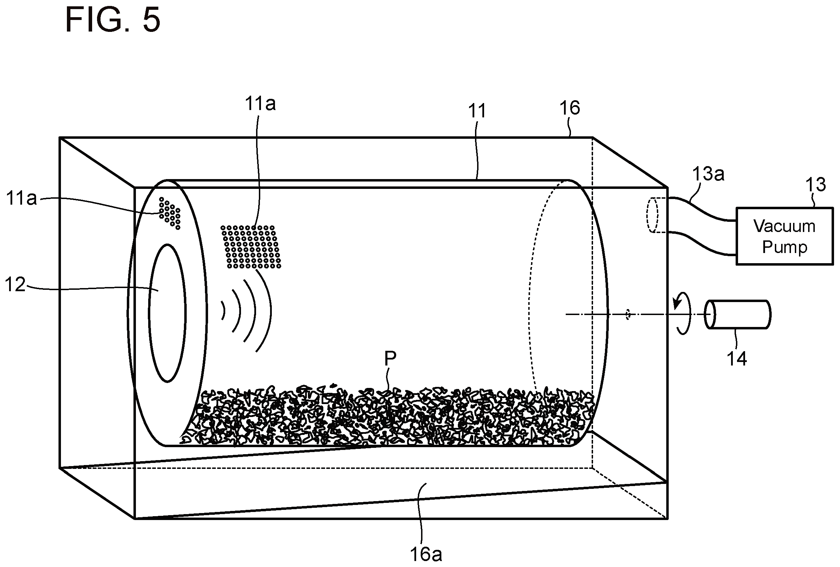

A plastic drying device according to a fourth embodiment is explained using FIG. 5. FIG. 5 is a schematic configuration diagram of the plastic drying device according to the third embodiment. Note that components having functions similar to those of components explained in the first and second embodiments described above are given identical reference signs, and explanation thereof is omitted.

As illustrated in FIG. 5, the plastic drying device according to the fourth embodiment has a structure obtained by adding holes 11a of a container 11 and an external container 16 to the structure of the plastic drying device according to the third embodiment.

The container 11 has a plurality of the holes 11a. The plurality of holes 11a are provided through the outer wall of the container 11. For example, the plurality of holes 11a are formed through each of the side surfaces and outer circumferential surface of the container 11. The sizes of the holes 11a are smaller than the sizes of plastic fragments P.

The external container 16 contains the container 11. In addition, the external container 16 has an inclined surface 16a below the container 11 contained therein. The inclined surface 16a inclines gradually downward toward the outer side of the external container 16. The container 11 is supported rotatably inside the external container 16. For example, the external container 16 is formed using a metal material.

The leading end of a vacuum exhaust tube 13a of a vacuum pump 13 is connected to a side surface of the external container 16, and communicates with the inside of the external container 16. Because of this, when the vacuum pump 13 is driven, the vacuum pump 13 evacuates the external container 16 via the vacuum exhaust tube 13a. At this time, since the plurality of holes 11a are formed through the container 11, the container 11 is evacuated together with the external container 16 through the holes 11a.

In addition, when the container 11 is rotated by a rotating unit 14, the plastic fragments P contained inside the container 11 are stirred by the rotation of the container 11. At this time, water adhering to the plastic fragments P either evaporates from the plastic fragments or scatters from the plastic fragments and drips down to the inside of the external container 16 through the holes 11a. Among these, water having dripped down to the inside of the external container 16 flows along the inclination of the inclined surface 16a, is collected and thereafter is discharged from the external container 16. Because of this, the plastic drying device according to the fourth embodiment is capable of shortening the drying time of plastic.

Here, since the sizes of the holes 11a are smaller than the sizes of the plastic fragments P, the plastic fragments do not jump out through the holes 11a to the inside of the external container 16 during the evacuation of the vacuum pump 13 and during the rotation of the container 11. Furthermore, since the external container 16 is formed using a metal material, the leakage of microwaves generated from a microwave generating unit 12 can be prevented.

As described above, the plastic drying device according to the fourth embodiment includes: the plurality of holes 11a provided through the outer wall of the container 11, and communicating with the inside of the container 11; and the external container 16 rotatably containing the container 11, and the vacuum pump 13 evacuates the inside of the container 11 through the inside of the external container 16. Because of this, the plastic drying device according to the fourth embodiment is capable of discharging water from the plastic fragments P.

In addition, the plastic drying device according to the fourth embodiment includes the inclined surface 16a provided in the external container 16 and inclining toward the outside of the external container 16 below the container 11. Because of this, the plastic drying device according to the fourth embodiment is capable of easily collecting water having dripped down from the container 11 to the inside of the external container 16, and discharging the water from the external container 16.

Furthermore, in the plastic drying device according to the fourth embodiment, the external container 16 is formed using a metal material. Because of this, the plastic drying device according to the fourth embodiment is capable of preventing the leakage of microwaves from the external container 16.

### Fifth Embodiment.

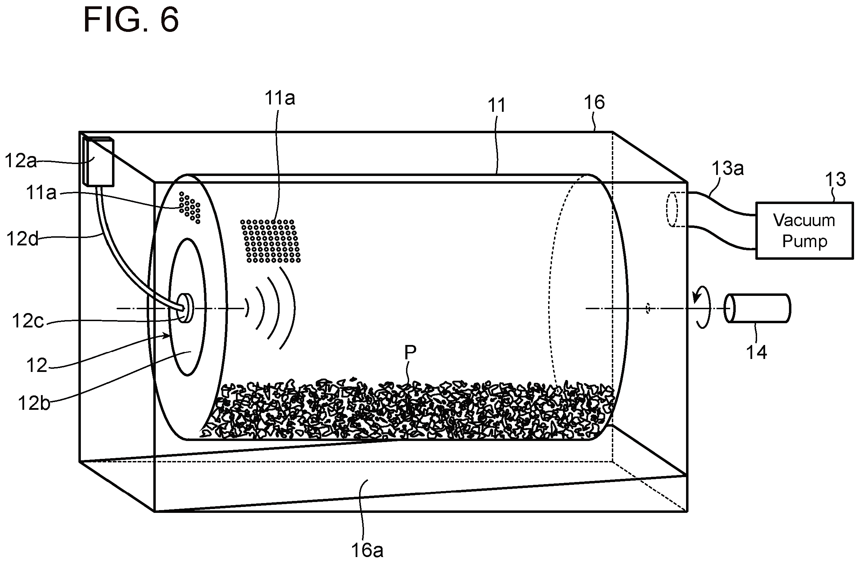

A plastic drying device according to a fifth embodiment is explained using FIG. 6. FIG. 6 is a schematic configuration diagram of the plastic drying device according to the fifth embodiment. Note that components having functions similar to those of components explained in the first, second, and fourth embodiments described above are given identical reference signs, and explanation thereof is omitted.

FIG. 6 specifically illustrates the configuration of a microwave generating unit 12. As illustrated in FIG. 6, the microwave generating unit 12 has a microwave source 12a, an antenna 12b, a rotary joint 12c, and a microwave transfer line 12d.

The microwave source 12a is a portion to generate microwaves. The microwave source 12a is provided on the inner surface of an external container 16. Note that the microwave source 12a need not necessarily be provided in the external container 16, and it is sufficient if the microwave source 12a is installed at a position outside a container 11 and spaced apart from the container 11.

The antenna 12b is a portion to emit microwaves. The antenna 12b has a circular shape. The antenna 12b is fixed to the container 11. Specifically, the antenna 12b is disposed to be coaxial with the central axis of the container 11, which is its rotation axis, and to be orthogonal to the central axis of the container 11.

The rotary joint 12c is provided at the center of the antenna 12b. The rotary joint 12c is electrically connected to the antenna 12b, while enables rotation of the antenna 12b.

The microwave transfer line 12d allows transfer of microwaves. The microwave transfer line 12d electrically connects the microwave source 12a and the rotary joint 12c. That is, the microwave source 12a is electrically connected to the antenna 12b via the microwave transfer line 12d and the rotary joint 12c. It is sufficient if the microwave transfer line 12d is one that is capable of transferring microwaves, and, for example, is a coaxial cable or a waveguide.

Because of this, the stationary microwave source 12a installed on the external container 16 can be kept electrically connected to the antenna 12b even when the antenna 12b rotates along with the container 11. Microwaves generated from the microwave source 12a are transferred to the antenna 12b via the microwave transfer line 12d and the rotary joint 12c.

In this manner, in the microwave generating unit 12, the antenna 12b can be disposed to be orthogonal to the central axis of the container 11 on the central axis of the container 11. As a result, the microwave generating unit 12 is capable of uniformly emitting microwaves generated from the antenna 12b to plastic fragments P contained inside the container 11.

As described above, in the plastic drying device according to the fifth embodiment, the microwave generating unit 12 has: the microwave source 12a to generate microwaves, the microwave source 12a being provided for the external container 16; the antenna 12b to emit the microwaves toward the inside of the container 11, the antenna 12b being disposed to be coaxial with the central axis of the container 11 and to be orthogonal to the central axis of the container 11; and the rotary joint 12c electrically connected to the microwave source 12a via the microwave transfer line 12d, and electrically connected to the antenna 12b while enables rotation of the antenna 12b. Because of this, the plastic drying device according to the fifth embodiment is capable of uniformly emitting microwaves generated from the antenna 12b to the plastic fragments P contained inside the container 11.

### Sixth Embodiment.

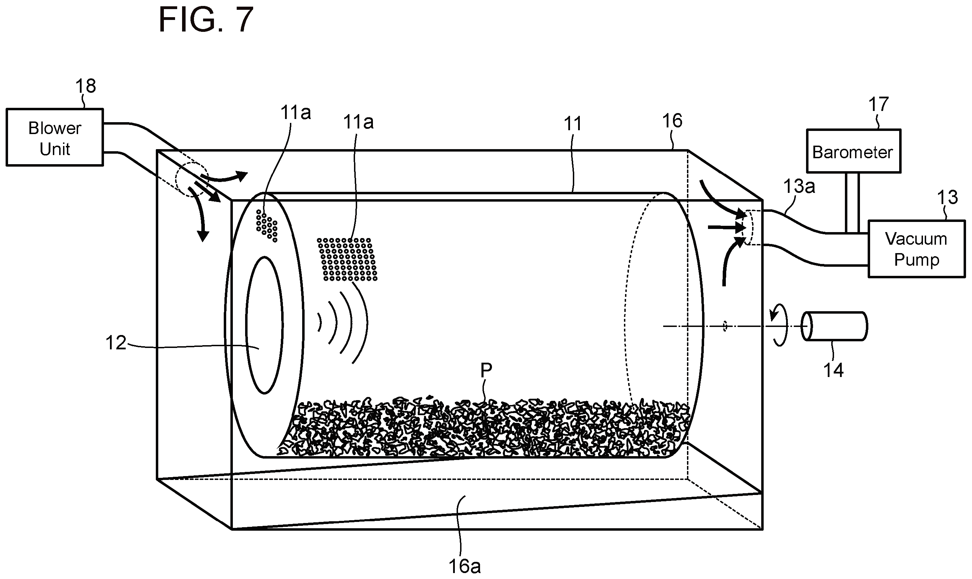

A plastic drying device according to a sixth embodiment is explained using FIG. 7. FIG. 7 is a schematic configuration diagram of the plastic drying device according to the sixth embodiment. Note that components having functions similar to those of components explained in the first, second, fourth, and fifth embodiments described above are given identical reference signs, and explanation thereof is omitted.

As illustrated in FIG. 7, the plastic drying device according to the sixth embodiment has a structure obtained by adding a barometer 17 and a blower unit 18 to the structure of the plastic drying device according to the fourth embodiment.

The barometer 17 is connected to a vacuum exhaust tube 13a of a vacuum pump 13. Because of this, the barometer 17 can measure the internal air pressure of a container 11. The blower unit 18 is connected to the inside of an external container 16. Because of this, the blower unit 18 can feed air to the inside of the container 11 via the inside of the external container 16.

The plastic drying device according to the sixth embodiment controls the air feeding amount of the blower unit 18 on the basis of the air pressure measured by the barometer 17. Because of this, the plastic drying device according to the sixth embodiment can maintain the internal air pressure of the container 11 at an air pressure within a predetermined range. Accordingly, plasma generation inside the container 11 can be reduced. There is a possibility that plasma generation adversely affects the emission efficiency of microwaves.

As described above, the plastic drying device according to the sixth embodiment includes the barometer 17 to measure the internal air pressure of the container 11, the barometer 17 being connected to the vacuum pump 13; and the blower unit 18 to feed air toward the inside of the container 11 on the basis of the air pressure measured by the barometer 17. Because of this, the plastic drying device according to the sixth embodiment is capable of reducing plasma generation inside the container 11.

Note that the present disclosure allows for any combination of each of the embodiments, modification of any constituent elements in each of the embodiments, and omission of any constituent elements in each of the embodiments, within the scope of the disclosure.

### INDUSTRIAL APPLICABILITY

By including the microwave generating unit and the evacuating unit for the container to contain plastic fragments, the plastic drying device according to the present disclosure is capable of selectively heating water adhering to the plastic fragments and of not directly heating the plastic fragments, and is suited for being used for a plastic drying device and the like.

### REFERENCE SIGNS LIST

11: Container; 11a: Hole; 12: Microwave generating unit; 12a: Microwave source; 12b: Antenna; 12c: Rotary joint; 12d: Microwave transfer line; 13: Vacuum pump; 13a: Vacuum exhaust tube; 14: Rotating unit; 15: Protrusion; 16: External container; 16a: Inclined surface; 17: Barometer; 18: Blower unit; P: Plastic fragment

## Claims

1. A plastic drying device comprising:
a container to internally contain a plastic fragment;
a microwave generating unit to emit a microwave to inside of the container; and
an evacuating unit to evacuate the inside of the container, the evacuating unit communicating with the inside of the container.

2. The plastic drying device according to claim 1, comprising a rotating unit to rotate the container about a central axis of the container.

3. The plastic drying device according to claim 2, comprising a protrusion protruding from an inner surface of the container toward an inner side of the container.

4. The plastic drying device according to claim 2 or 3, comprising:
a plurality of holes provided through an outer wall of the container, and communicating with the inside of the container; and
an external container rotatably containing the container, wherein
the evacuating unit evacuates the inside of the container via inside of the external container.

5. The plastic drying device according to claim 4, comprising an inclined surface provided in the external container and inclining toward outside of the external container below the container.

6. The plastic drying device according to claim 4 or 5, wherein the external container is formed using a metal material.

7. The plastic drying device according to any one of claims 4 to 6, wherein
the microwave generating unit has:
a microwave source to generate a microwave, the microwave source being provided for the external container;
an antenna to emit a microwave toward the inside of the container, the antenna being disposed to be coaxial with the central axis of the container and to be orthogonal to the central axis of the container; and
a rotary joint to enable rotation of the antenna, the rotary joint being electrically connected to the microwave source via a microwave transfer line, and electrically connected to the antenna.

8. The plastic drying device according to any one of claims 1 to 7, comprising:
a barometer to measure an internal air pressure of the container, the barometer being connected to the evacuating unit; and
a blower unit to feed air to the inside of the container on a basis of the air pressure measured by the barometer.

9. The plastic drying device according to claim 1, wherein the microwave generating unit is provided for the container.

10. The plastic drying device according to claim 1, wherein the microwave generating unit is provided at a position separated from the container.
